# EUROPÄISCHE PATENTANMELDUNG

(11) **EP 1 510 405 A1**
(43) Veröffentlichungstag der Anmeldung: **02.03.2005**
(21) Anmeldenummer: 04019450.8
(22) Anmeldetag: 17.08.2004
(51) Int. Cl.: B60R 7/04

(54) **Adapter zum Befestigen von Gegenständen an Fahrzeugsitzen**

(30) Priorität: 29.08.2003 DE 10340321
(71) Anmelder: DaimlerChrysler AG, 70567 Stuttgart (DE)
(72) Erfinder: Bilgin, Muammer, 75181 Pforzheim (DE); Müller, Johannes, 70180 Stuttgart (DE); Uhlig, Frank Markus, 70193 Stuttgart (DE)

(57) **Zusammenfassung**

Die vorliegende Erfindung betrifft einen Adapter zum Befestigen von unterschiedlichen Gegenständen an der Rückenlehne von mit Kopfstützen ausgestatteten Fahrzeugsitzen, der einfach und vorzugsweise einstückig herstellbar ist, ein handhabungsfreundliches Anbringen am Fahrzeugsitz ermöglicht und welcher in allen Richtungen lagearretierbar ist. Diese Aufgabe wird erfindungsgemäß durch einen Adapter gelöst, der im Tragstangenbereich aus mindestens zwei zueinander vertikal beabstandet angeordneten Halteflächen (16,17) besteht, wobei in der oberen Haltefläche (17) die Öffnungen (5) für die Tragstangen angeordnet sind und die untere Haltefläche (16) mit in gleicher horizontaler Wirkrichtung unter die Bundkörper (8) der Führungshülsen (7) schiebbaren Untergreifsegmenten (6) versehen ist.

## Beschreibung

Die Erfindung betrifft einen Adapter zum Befestigen von unterschiedlichen Gegenständen an der Rückenlehne von mit Kopfstützen ausgestatteten Fahrzeugsitzen.

Es ist bekannt, Gegenstände, wie zum Beispiel Aktenkoffer, Tischplatten, tragbare Computer, Halterungen für Getränkebehälter usw., an der Rückseite der Rückenlehne von Fahrzeugsitzen anzuordnen. Dabei werden die an der Rückenlehne angeordneten Kopfstützen zur Befestigung der Gegenstände genutzt, indem entsprechende Teile der Gegenstände mit den Tragstangen der Kopfstützen verbunden werden. Dabei kann das Befestigen der Gegenstände direkt an den Tragstangen erfolgen. Eine solche Lösung ist zum Beispiel aus der DE 195 46 543 A1 bekannt.

Weiterhin ist es üblich, an der Rückenlehne einen Adapter anzuordnen, welcher mittels der Tragstangen befestigt ist. An diesem Adapter können dann unterschiedliche Gegenstände über korrespondierende Verbindungsmittel angedockt werden. Derartige Lösungen sind in den DE 199 31 020 A1 und DE 199 04 193 A1 beschrieben.

Nach der DE 199 01 073 A1 ist es außerdem bekannt, einen mit Öffnungen für die Tragstangen der Kopfstütze versehenen Adapter auf der Oberseite der Rückenlehne anzuordnen, an welchem ebenfalls mit korrespondierenden Verbindungsmitteln versehene Gegenstände anbringbar sind. Die Tragstangen der Kopfstütze durchragen die Öffnungen des Adapters in vertikaler Richtung, wodurch eine formschlüssige Arretierung des Adapters in horizontaler Ebene erfolgt.

Eine horizontale Fixierung des Adapters erfolgt bei den bekannten Lösungen nicht. Ein Anbringen des Adapters ist immer nur gleichzeitig mit dem Einführen der Tragstangen in die Führungshülsen möglich. Das erschwert das Ausrichten und Einführen der Tragstangen.

Es ist daher Aufgabe der Erfindung, einen Adapter zum Befestigen von unterschiedlichen Gegenständen an der Rückenlehne von mit Kopfstützen ausgestatteten Fahrzeugsitzen zu schaffen, der einfach und vorzugsweise einstückig herstellbar ist, ein handhabungsfreundliches Anbringen am Fahrzeugsitz ermöglicht und welcher in allen Richtungen lagearretierbar ist.

Erfindungsgemäß wird diese Aufgabe durch einen Adapter mit den Merkmalen des Patentanspruchs 1 gelöst. Vorteilhafte Ausgestaltungen der Erfindung sind in den Unteransprüchen angegeben.

Die Vorteile der Erfindung bestehen insbesondere in der allseitigen Lagesicherung des Adapters durch die zwei zueinander vertikal beabstandet angeordneten Halteflächen, wobei keine zusätzlichen Sicherungselemente notwendig sind. Beim Anbringen des Adapters ist weiterhin vorteilhaft, dass durch das klemmende Untergreifen der Bundkörper der Führungshülsen mittels der Untergreifsegmente schon eine Lagefixierung des Adapters erfolgt. Anschließend ist ein günstiges und bequemes Ausrichten und Einführen der gelenkig am Kopfpolster befestigten Tragstangen möglich. Das einfache Aufsetzen und Aufschieben des Adapters wird durch die seitlich offene Ausbildung der unteren Haltefläche im Bereich Untergreifsegmente erreicht. Die U-förmige Ausbildung gewährleistet eine günstige Anpassung an die Kontur der Rückenlehne. Durch die in den Wandungen angeordneten Aussparungen ist ein Zugang zu den Arretierschiebern an den Führungshülsen gewährleistet. Die Verwendung eines Nut-Feder-Prinzips mit ausgebildetem Anschlag gewährleistet ein einfaches und sicheres Andocken des Adaptereinsatzmoduls am Adapter. Durch die Ausbildung einer federnden Verriegelungslasche mit Klemmelement ist auf einfache Weise ein Arretieren sowie Lösen des Adaptereinsatzmoduls möglich.

Ein Ausführungsbeispiel der Erfindung ist in der Zeichnung dargestellt und wird im folgenden näher beschrieben.

Dabei zeigen:
- Fig. 1: eine perspektivische Ansicht des Adapters
- Fig. 2: eine perspektivische Ansicht des Adapters mit Teilschnitt
- Fig. 3: einen Adapter vor dem Fixieren auf der Rückenlehne

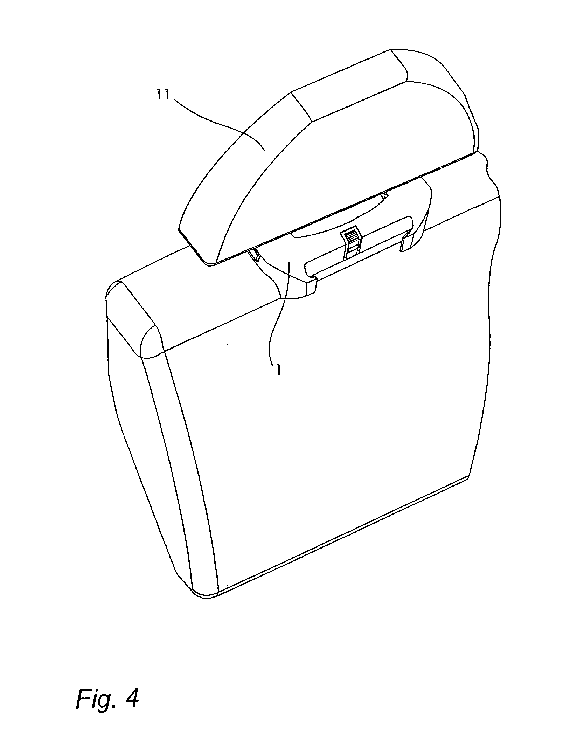

- Fig. 4: einen montierten Adapter mit Kopfstütze
- Fig. 5: eine Ansicht gemäß Figur 4 mit Aktenkoffer

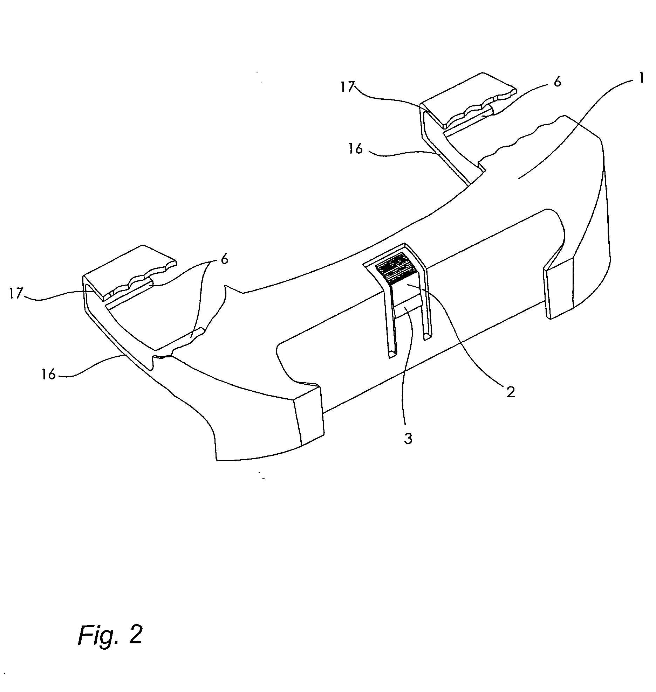

Der Adapter 1 ist einstückig und in der Draufsicht U-förmig ausgebildet. In den Tragstangenbereichen ragen schenkelförmig jeweils die vertikal beabstandeten Halteflächen 16, 17 nach vorn. Die Halteflächen 16, 17 sind durch Wandungen 19 miteinander verbunden. Im Bereich der mit Arretierschiebern 9 versehenen Bundkörper 8 weisen die Wandungen 19 Aussparungen 18 auf. In den oberen Haltflächen 17 ist jeweils eine Öffnung 5 für die in den Figuren nicht sichtbaren Tragstangen der Kopfstütze angeordnet. Dabei sind Größe und Form der Öffnungen 5 dem Querschnitt der Tragstangen angepasst. Die unteren Haltflächen 16 weisen im Bereich der Führungshülsen 7 Untergreifsegmente 6 auf. Dabei sind die Untergreifsegmente 6 in gleicher Wirkrichtung angeordnet und seitlich offen ausgestaltet (Fig. 2) .

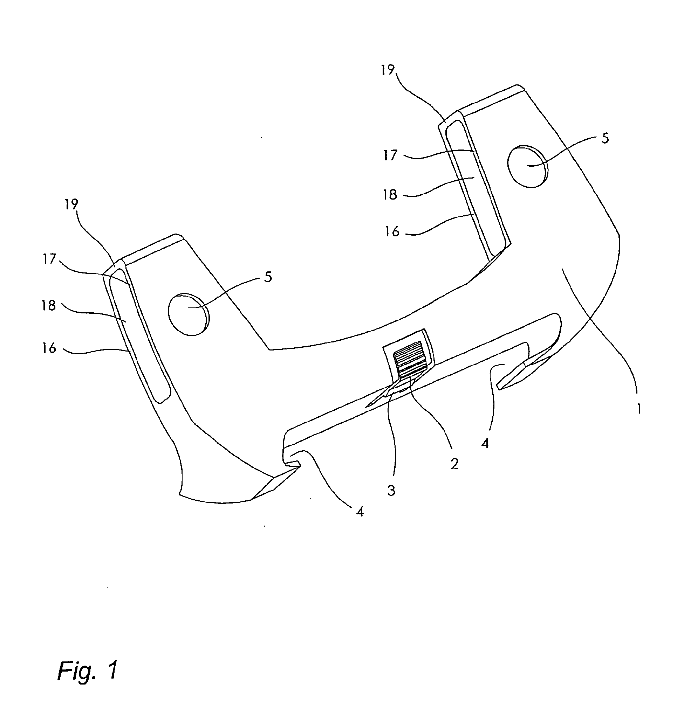

Der Adapter ist fondseitig mit vertikal verlaufenden und einander zugewandten Nuten 4 zur Aufnahme eines Adaptereinsatzmoduls 12 versehen (Fig. 1). Korrespondierend dazu weist Adaptereinsatzmodul 12 seitlich Federn 14 auf. Jede Feder 14 ist außerhalb ihres Nuteneinschubbereiches als ein Anschlag 15 ausgebildet.

Im Andockbereich des Adaptereinsatzmoduls 12 ist eine federnde Verriegelungslasche 2 mit einem Klemmelement 3 ausgeformt.

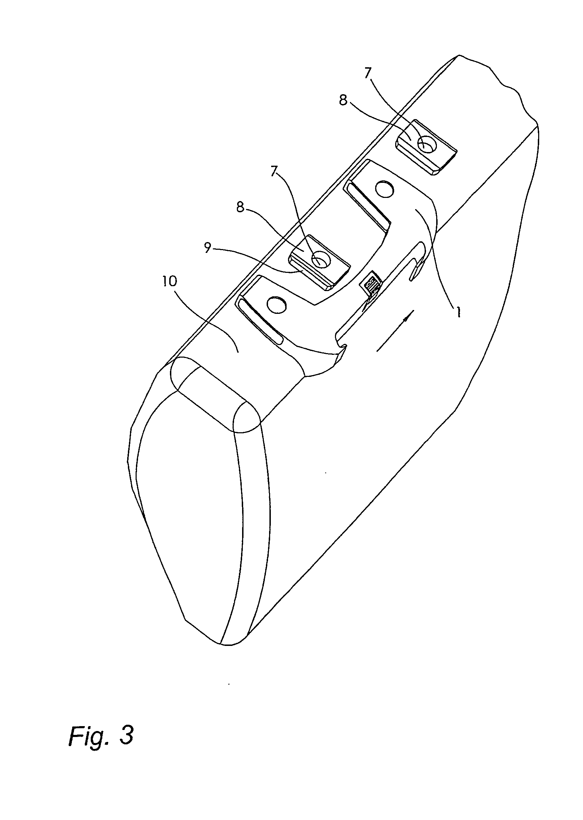

Zum Anbringen des Adapters 1 wird die Kopfstütze von der Rückenlehne entfernt. Der Adapter 1 wird, wie in Figur 3 gezeigt, auf die Lehnenoberseite 10 aufgelegt und in Pfeilrichtung verschoben, bis sich die Öffnungen 5 exakt über den Führungshülsen 7 befinden. Dabei schieben sich die Untergreifsegmente 6 klemmend unter die Bundkörper 8 der Führungshülsen 7. Dadurch ist der Adapter 1 lagedefiniert auf der Lehnenoberseite 10 fixiert. Jetzt werden die gelenkig am Kopfpolster 11 befestigten Tragstangen ausgerichtet, in die Führungshülsen 7 eingeführt und in der gewünschten Höhe positioniert. Der Adapter 1 ist damit in allen Richtungen lagearretiert. Dies wird erzielt durch die formschlüssige Wirkung der Untergreifsegmente 6 und der durch die Öffnungen 5 ragenden Tragstangen. Ein Entfernen des Adapters 1 ist in umgekehrter Reihenfolge durchzuführen.

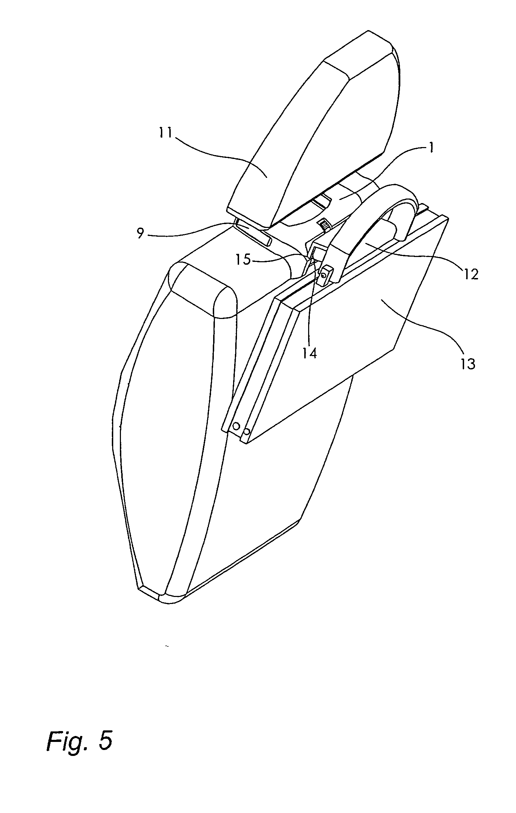

Zum Befestigen des in Figur 5 dargestellten Aktenkoffers 13 weist dieser im Bereich des Griffs ein Adaptereinsatzmodul 12 auf.

Durch Einschieben der Federn 14 des Adaptereinsatzmoduls 12 in die Nuten 4 rastet das Klemmelement 3 in eine nicht sichtbare Ausformung des Adaptereinsatzmoduls 12 ein, wodurch eine Arretierung des Adaptereinsatzmoduls 12 im Adapter 1 erfolgt und der Aktenkoffer 13 lagefixiert an der Rückenlehne befestigt ist. Zum Entfernen des Aktenkoffers 13 ist die Verriegelungslasche 2 in Richtung Rückenlehne zu drücken, wodurch ein Ausrasten des Klemmelementes 3 erfolgt, und das Adaptereinsatzmodul 12 aus dem Adapter 1 herausgezogen werden kann.

Mit gleichartig ausgebildeten Adaptereinsatzmodulen können die unterschiedlichsten Gegenstände, wie Aktenkoffer, Tischplatten, tragbare Computer, Halterungen für Getränkebehälter usw. an einem Fahrzeugsitz befestigt werden.

## Patentansprüche

1. Adapter zum Befestigen von unterschiedlichen Gegenständen an der Rückenlehne von mit Kopfstützen ausgestatteten Fahrzeugsitzen, der auf der Rückenlehnenoberseite im Bereich der Kopfstütze befestigt ist, wobei Öffnungen im Adapter von den Tragstangen der Kopfstütze durchragt werden,
**dadurch gekennzeichnet,**
**dass** der Adapter (1) im Tragstangenbereich aus mindestens zwei zueinander vertikal beabstandet angeordneten Halteflächen (16, 17) besteht, wobei in der oberen Haltefläche (17) die Öffnungen (5) für die Tragstangen angeordnet sind und die untere Haltefläche (16) mit in gleicher horizontaler Wirkrichtung unter die Bundkörper (8) der Führungshülsen (7) schiebbaren Untergreifsegmente (6) versehen sind.

2. Adapter nach Anspruch 1,
**dadurch gekennzeichnet,**
**dass** das jeweilige Untergreifsegment (6) seitlich offen ausgestaltet ist.

3. Adapter nach Anspruch 1,
**dadurch gekennzeichnet,**
**dass** der Adapter (1) in der Draufsicht U-förmig ausgebildet ist, wobei die Öffnungen (5) und die Untergreifsegmente (6) in den Schenkelbereichen ausgebildet sind.

4. Adapter nach Anspruch 1,
**dadurch gekennzeichnet,**
**dass** die die Halteflächen (16, 17) verbindenden Wandungen (19) Aussparungen (18) aufweisen

5. Adapter nach Anspruch 1,
**dadurch gekennzeichnet,**
**dass** fondseitig am Adapter zwei vertikal verlaufende und einander zugewandte Nuten (4) zur Aufnahme eines Adaptereinsatzmoduls (12) angeordnet sind.

6. Adapter nach den Ansprüchen 1 und 5,
**dadurch gekennzeichnet,**
**dass** das Adaptereinsatzmodul (12) seitlich Federn (14) aufweist, die mit den jeweiligen Nuten (4) korrespondierend ausgebildet sind.

7. Adapter nach den Ansprüchen 1, 5 und 6,
**dadurch gekennzeichnet,**
**dass** jede Feder (14) außerhalb ihres Nuteneinschubbereichs als ein einschubbegrenzender Anschlag (15) ausgebildet ist.

8. Adapter nach den Ansprüchen 1 und 5,
**dadurch gekennzeichnet,**
**dass** im Andockbereich des Adaptereinsatzmoduls (12) eine federnde Verriegelungslasche (2) mit einem Klemmelement (3) ausgeformt ist, wobei im Falle des Andockens des Adaptereinsatzmoduls (12) das Klemmelement (3) mit einem Gegenstück des Adaptereinsatzmoduls (12) in Wirkverbindung steht.
